# EUROPEAN PATENT SPECIFICATION

(11) **EP 3 804 069 B1**
(45) Date of publication and mention of the grant of the patent: **26.07.2023**
(21) Application number: 18746088.6
(22) Date of filing: 25.05.2018
(51) Int. Cl.: H02J 3/30, H02J 15/00, H02K 7/02, H02K 7/09

(54) **MOTION-STATE DEPENDENT OPERATION OF KINETIC GENERATOR ON A MARINE VESSEL OR PLATFORM**
BEWEGUNGSZUSTANDSABHÄNGIGER BETRIEB EINES KINETISCHEN GENERATORS AUF EINEM SCHIFF ODER EINER PLATTFORM
FONCTIONNEMENT DÉPENDANT DE L'ÉTAT DE MOUVEMENT D'UN GÉNÉRATEUR CINÉTIQUE SUR UN BÂTIMENT OU PLATE-FORME MARIN

(43) Date of publication of application: 14.04.2021
(73) Proprietor: Noble Drilling A/S, 2800 Kgs. Lyngby (DK)
(72) Inventor: PEDERSEN, John Røn, DK-3630 Jægerspris (DK); HØFFNER, Jan, 4450 Jyderup (DK)
(74) Representative: Marks & Clerk LLP
(86) International application number: PCT/DK2018/000017
(87) International publication number: WO 2019/223842

(56) References cited:
- EP-A1- 0 849 170
- WO-A1-2017/097305
- WO-A1-2019/076419
- DK-B1- 179 638
- GB-A- 2 517 523

## Description

### BACKGROUND

Many different types of marine vessels and platforms have significant power requirements and incorporate a self-contained electric power system, often referred to as a "microgrid". In the context of the present invention marine vessels includes typical marine vessels (e.g., supply vessels, cargo ships, merchant vessels, and ferries) as well as offshore drilling rigs (e.g., semisubmersible drilling platforms and drillships), and offshore platforms to the extent that the platform experience substantial motions due to environmental loads such as wind, currents and waves such as some types of offshore mining platforms. The microgrid typically powers a variety of electric loads. In the case of an offshore drilling rig (also referred to as mobile offshore drilling unit), such loads include drawworks, winches, hydraulic power units (HPUs), electric thrusters, mud pumps, top drives, rotary tables, dynamic braking systems, cement pumps, cranes and peripheral electrical loads. Some of these electric loads are relatively constant. For example, lighting, HVAC (heating, ventilation and air conditioning), pumps, agitators, mixers, and air compressors commonly present a base load of approximately one to five megawatts (MW). Mud pumps, top drives, and rotary tables may also present a relatively constant electric load.

On the other hand, some significant electric loads on an offshore drilling rig may be very dynamic. For instance, drawworks, winches, thrusters, cranes, HPUs, and mud pumps present highly variable loads with peak power demands that are, for example, two to three times larger than typical base loads. As one particular example, some drawworks have a load requirement that can vary by up to ten MW in less than twenty seconds and that can ramp up from zero to about seven MW in less than two seconds. As another example, drillships and semisubmersible drilling rigs use thrusters to maintain a constant position relative to an oil well on the ocean floor. Each thruster on a drillship or semisubmersible drilling rig may represent a maximum load of around five to seven MW, and a typical drilling rig may have six to eight thrusters, resulting in a total thruster maximum load of over thirty MW. Each thruster may ramp up to its maximum load in approximately ten to twenty seconds, and multiple thrusters may be activated at once. Thrusters may therefore present a very large transient load on a drilling rig. Consequentially, an offshore drilling rig's microgrid must support significant transient, as well as steady-state, electric loads. Additionally, an offshore drilling rig's microgrid must be highly reliable since an electric power failure or "blackout" may have catastrophic consequences, including loss of life, significant environmental damage, and large economic loss.

AC combustion generators or "gensets" are commonly used to provide electric power in a microgrid. These generators require significant time to start-up and cannot quickly respond to load changes. Consequently, these generators are conventionally operated with large "spinning reserve," i.e., spare generating capacity of operating generators, to support load increases, as well as to ensure sufficient generator capacity in case of a single generator failure. Supercapacitors may be used to support transient loads, and conventional battery may be used to supply power for a limited time in the event of complete generator failure.

WO2017097305 A1 discloses a method for operating a microgrid electric power generation system. The method includes delivering energy to an electric power bus from a kinetic generator electrically coupled to the electric power bus, controlling the kinetic generator in response to a change in a load such that a magnitude of a voltage on the electric power bus remains within a predetermined voltage range, and controlling one or more combustion generators electrically coupled to the electric power bus based at least in part on an operating state of the one or more kinetic generators. The kinetic generator can deliver energy to and store energy from the electric power bus.

The purpose of the invention is to provide a method for operating a kinetic generator on a marine vessel or platform.

### SUMMARY

The invention defined by a motion-state dependent method as defined in claim 8, a control system for motion-state dependent operation of a kinetic generator as claimed in claim 1, a kinetic generator system for motion-state dependent operation of a kinetic generator as defined in claim 5, and a microgrid electric power generation system as defined in claim 7. Further embodiments of the invention are set out by the dependents claims.

In an embodiment, a motion- state dependent method for operating a kinetic generator on a marine vessels or platform includes determining a motion state of the marine vessels or platform and imposing a limit on at least one of charging and discharging of the kinetic generator based upon the motion state to keep the kinetic generator within a safe operating range.

In an embodiment, the step of imposing includes, based upon the motion state, limiting at least one of acceleration and deceleration of a rotor of the kinetic generator.

In an embodiment, the step of imposing includes, for each of the at least one of charging and discharging of the kinetic generator, imposing a limit selected from a corresponding discrete plurality of rates.

In an embodiment, the method includes (a) in the step of determining, determining value of a motion characteristic of the marine vessels or platform, and (b) in the step of imposing, limiting rate of at least one of charging and discharging of the kinetic generator to a rate that is a gradual function of the value of the motion characteristic.

In an embodiment, the step of imposing includes, when the marine vessels or platform is in a state of high motion, at least one of (a) disabling charging of the kinetic generator and (b) limiting peak-shaving capability of the kinetic generator.

In an embodiment, the step of imposing includes, when the marine vessels or platform is in a state of high motion, allowing load support by the kinetic generator with deceleration rate of the rotor limited to less than a corresponding deceleration rate allowed when the marine vessels or platform is in a state of less motion.

In an embodiment, the method further includes monitoring at least one motion characteristic of the marine vessels or platform.

In an embodiment, the step of imposing includes automatically changing operation mode of the kinetic generator based upon said monitoring.

In an embodiment, the step of automatically changing includes changing from a present operation mode of the kinetic generator upon consistently sensing, over a predefined duration of the step of monitoring, that the at least one motion characteristic is associated with another operation mode of the kinetic generator.

In an embodiment, the step of monitoring includes sensing motion or inclination angle of at least one of a non-rotor portion of kinetic generator and a local environment of kinetic generator.

In an embodiment, the step of monitoring includes measuring a current of the active magnetic bearing.

In an embodiment, the method includes (a) in the step of determining, comparing static inclination and dynamic inclination of the marine vessels or platform to respective thresholds, and (b) in the step of imposing, when at least one of the static inclination and the dynamic inclination exceeds its threshold, limiting at least one of charging and discharging of the kinetic generator to a rate that is less than a corresponding rate associated with the static inclination and dynamic inclination both being below their respective thresholds.

In an embodiment, a control system for motion-state dependent operation of a kinetic generator on a marine vessels or platform includes (a) a processor configured to be communicatively coupled to the kinetic generator, (b) an interface, communicatively coupled with the processor, for receiving a sensor signal indicative of a motion characteristic of the marine vessels or platform, and (c) a non-transitory memory including machine- readable instructions that, upon execution by the processor, perform steps of processing the sensor signal to determine a motion state of the marine vessels or platform, and imposing a limit on at least one of charging and discharging of the kinetic generator based upon the motion state to keep the kinetic generator within a safe operating range.

In an embodiment, the machine-readable instructions are configured to, upon execution by the processor and when said processing determines that the marine vessels or platform is in a state of high motion, disable charging of the kinetic generator.

In an embodiment, the non-transitory memory further including a plurality of discharge rate limits, the machine-readable instructions being configured to, upon execution by the processor and based upon the motion state, limit the discharge rate of the kinetic generator to one of the discharge rate limits.

In an embodiment, the non-transitory memory further includes at least one of (i) a discharge function defining a discharge rate limit as a function of a value of a motion characteristic of the marine vessels or platform and (ii) a charge function defining a charge rate limit as a function of a value of a motion characteristic of the marine vessels or platform, and the machine-readable instructions are configured to, upon execution by the processor, process the sensor signal to determine the value of the motion characteristic and apply at least one of the discharge function and the charge function to impose at least of the discharge rate limit and the charge rate limit.

In an embodiment, the non-transitory memory further includes at least one inclination limit, and the machine-readable instructions being configured to, upon execution by the processor, process the sensor signal to determine an inclination of the kinetic generator, and based upon comparison of the inclination with the at least one inclination limit at least one of charging and discharging of the kinetic generator.

In an embodiment, the at least one inclination limit includes a static inclination limit and a dynamic inclination limit, and the machine-readable instructions being configured to, upon execution by the processor, (i) process the sensor signal to determine both static and dynamic inclination of the kinetic generator, and (ii) when at least one of the static inclination and the dynamic inclination exceeds the static inclination limit and a dynamic inclination limit, respectively, limit at least one of charging and discharging of the kinetic generator to a rate that is less than a corresponding rate associated with the static inclination and dynamic inclination both being below their respective thresholds.

In an embodiment, the non-transitory memory further includes a time constant, and the machine-readable instructions being configured to, upon execution by the processor, change operation mode from a present operation mode of the kinetic generator upon consistently sensing, over a duration corresponding to the time constant, that at least one motion characteristic of the marine vessels or platform is associated with another operation mode of the kinetic generator.

In an embodiment, the interface is further configured to receive a user input requesting a switch from the low-motion mode to the high-motion mode, and the machine-readable instructions being configured to, upon execution by the processor, switch operation of the kinetic generator to the high-motion mode when receiving the user input.

In an embodiment, a kinetic generator system for motion-state dependent operation of a kinetic generator on a marine vessels or platform includes (1) one or more kinetic generators including a rotor and a magnetic induction coupling capable of (a) accelerating rotation of the rotor to convert electrical energy to kinetic energy stored in the one or more kinetic generators and (b) decelerating rotation of the rotor to generate electrical energy from stored kinetic energy, (2) at least one sensor for generating one or more sensor signals indicating at least one motion characteristic of the marine vessels or platform, and (3) a control module for (a) based upon the one or more sensor signals, determining a motion state of the marine vessels or platform, and (b) imposing a limit on at least one of rate of said accelerating and rate of said decelerating based upon the motion state, to keep the one or more kinetic generators within a safe operating range. In many embodiments one sensor per kinetic generator may be preferable as each kinetic generator includes the sensor arrangement to ensure its own integrity. However, in some embodiments the system is arrange so that multiple kinetic generators are controlled based on one or more sensors. Multiple sensors may be preferable to improve reliability of the sensor signal e.g. via a voting algorithm arranged to discard outlier signals which may be caused by a faulty sensor. The multiple sensors may in some embodiments provide signals to other systems or be part of other equipment such as MRU sensors in a dynamic positioning system.

In an embodiment, the at least one sensor includes an inclination sensor coupled to a non-rotor portion of the one or more kinetic generators or positioned in local environment of the one or more kinetic generators.

In an embodiment, the at least one sensor includes an accelerometer coupled to a non-rotor portion of the one or more kinetic generators or positioned in local environment of the one or more kinetic generators.

In an embodiment, the accelerometer and the control module are cooperatively configured to determine inclination of the one or more kinetic generators.

In an embodiment, the one or more kinetic generators further includes a fixture, a shaft for holding the rotor, and an active magnetic bearing for stabilizing the shaft in the fixture, and the at least one sensor includes a current sensor for measuring a current of the active magnetic bearing.

In an embodiment, the control module is configured to determine the motion state based upon the current measured by the current sensor.

In an embodiment, the control module is configured to disable said accelerating by the magnetic induction coupling when determining that the marine vessels or platform is in a state of high motion.

In an embodiment, the control module is configured to limit rate of said decelerating based upon the motion state.

In an embodiment the invention relates to a microgrid electric power generation system, comprising (i) an electric power bus; (ii) one or more a combustion generator electrically coupled to the electric power bus; and (iii) one or more kinetic generator systems as previously described. Such a microgrid will have the advantages of utilizing the kinetic generator for such as uses as peak shaving on the load on any combustion generators, capturing of excess power available such as from lowering a heavy load suspended from a drilling rig, power back up in case of interruptions in the operation of the combustion generators.

### BRIEF DESCRIPTION OF THE DRAWINGS

FIG. 1 illustrates an exemplary use scenario implementing one or more exemplary kinetic generators on a marine vessels or platform onboard a drillship, according to an embodiment.
FIG. 2 illustrates the kinetic generator of FIG. 1 in further exemplary detail.
FIGS. 3-5 illustrate exemplary magnetic bearings of the kinetic generator of FIG. 1.
FIG. 6 schematically illustrates inclination of a kinetic generator, according to an embodiment.
FIG. 7 is a block diagram of a kinetic generator system configured for implementation on a marine vessels or platform, according to an embodiment.
FIG. 8 illustrates a motion-state dependent method for operating a kinetic generator on a marine vessels or platform, according to an embodiment.
FIG. 9 illustrates a control module for motion-state dependent operation of a kinetic generator on a marine vessels or platform, according to an embodiment.
FIG. 10 illustrates a dual-mode method for operating a kinetic generator on a marine vessels or platform, according to an embodiment.
FIG. 11 illustrates a control module for dual-mode operation of a kinetic generator on a marine vessels or platform, according to an embodiment.

### DETAILED DESCRIPTION OF THE EMBODIMENTS

Disclosed herein are systems and methods implementing one or more kinetic generators as power sources on a marine vessel or platform, such as on a drillship or semisubmersible drilling rig. The disclosed systems and methods are configured to operate each kinetic generator in an operation mode that depends on the motion state of the marine vessels or platform in which the kinetic generator is situated. For example, when the marine vessels or platform is in a state of high motion, certain functionality of the kinetic generator is disabled in order to keep the kinetic generator within a safe operating range.

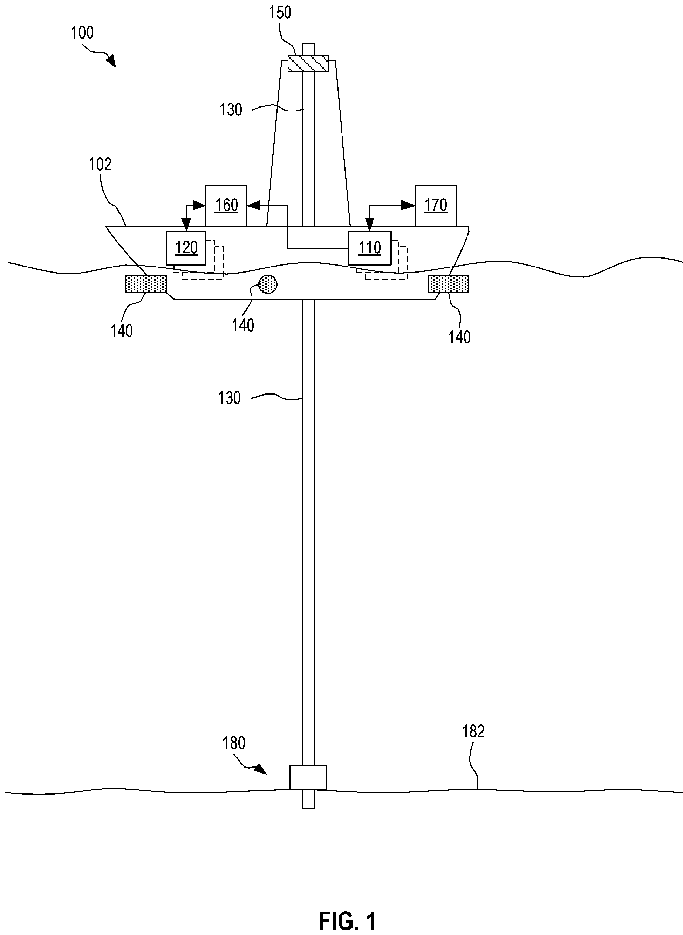

FIG. 1 illustrates one exemplary use scenario 100 implementing one or more exemplary kinetic generators 110 on a marine vessels or platform. In the exemplary use scenario of FIG. 1, one or more kinetic generators 110 are implemented onboard a drillship 102. Without departing from the scope hereof, kinetic generator(s) 110 may instead be implemented on a semisubmersible drilling rig or another marine vessel/platform subject to motion, including marine vessels. Drillship 102 is used to drill a well 180 on the ocean floor 182. Drillship 102 has thrusters 140 (for example, between four and eight thrusters 140) and engages thrusters 140 to maintain a constant position in the horizontal dimensions over well 180. For example, thrusters 140 may be engaged to counteract ocean current, waves, and/or wind. Drillship 102 also includes drawworks 150 that moves a drill 130 up and down as needed to drill well 180. Drillship 102 is likely to move up and down relative to ocean floor 182, and drawworks 150 therefore also actively raises and lowers drill 130 relative to drillship 102 in order to leave drill 130 stationary relative to well 180. Thrusters 140 and drawworks 150 are examples of systems onboard drillship 102 having large electric load requirements.

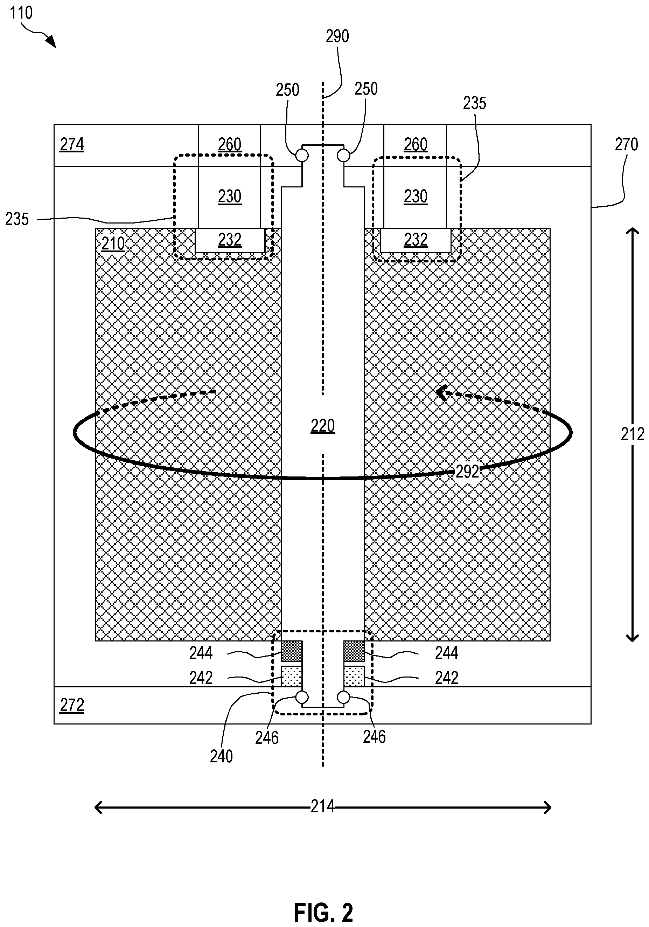

Drillship 102 includes one or more combustion generators 120 to at least partly support the load of thrusters 140, drawworks 150, and other systems onboard drillship 102. Drillship 102 further includes a power management system 160, one or more kinetic generators 110, and a control module 170. Each kinetic generator 110 stores energy in the form of kinetic energy. Each kinetic generator 110 is configured to (a) convert electric energy, supplied thereto, to kinetic energy of a rotor (not shown in FIG. 1) of kinetic generator 110 and (b) convert stored kinetic energy to electrical energy when an electrical energy output is required. Each kinetic generator is therefor suitable as energy storage in a powergrid, such as a microgrid. Each kinetic generator 110 includes one or more magnetic bearings for supporting the rotor to ensure contact-free support of the rotor in kinetic generator 110, so as to achieve high efficiency of kinetic generator 110 and also minimize wear on kinetic generator 110. For clarity of illustration, FIG. 1 does not show the magnetic bearings. However, the magnetic bearings are discussed in further detail below in reference to FIGS. 2-5. In an embodiment, these magnetic bearings are active magnetic bearings and make active adjustments to help ensure the contact-free support of the rotor in kinetic generator 110. Power management system 160 manages operation and power sourcing from combustion generators 120 and kinetic generators 110.

Power management system 160 may source energy from one or more kinetic generators 110 when combustion generators 120 are unable to meet the load demand of drillship 102. Kinetic generators 110 have a large energy storage capacity and a much shorter response time than combustion generator 120. Kinetic generators 110 are also capable of storing and delivering energy at a high rate. In particular embodiments, each kinetic generator 110 (a) is capable of responding to a change in load within ten milliseconds, or within one millisecond in some embodiments, (b) has an energy storage capacity of at least 100 kilowatt hours (kWh), and (c) has a maximum peak power output of at least one megawatt (MW). Additionally, in some embodiments, all kinetic generator 110 instances collectively have an energy storage capacity of at least one megawatt hour (MWh) and are capable of providing an output power of at least 1 MW for five or more minutes. Additionally, in certain embodiments, kinetic generators 110 collectively have a maximum power output that is at least as great as that of any one combustion generator 120 instance, such as 4-10 MW. In particular embodiments, each kinetic generator 110 has horizontal extent of less than 2 meters, such as 1.5 meters, and thus occupies only a relatively small footprint on drillship 102.

FIG. 2 illustrates kinetic generator 110 in further exemplary detail. Kinetic generator 110 is capable of (a) converting electrical energy to kinetic energy in the form of rotational energy at high efficiency, (b) storing the kinetic energy with low loss, and (c) converting the kinetic energy to electrical energy at high efficiency. Kinetic generator 110 includes a rotor 210 and a shaft 220. Rotor 210 is mechanically and rigidly coupled with shaft 220, and rotor 210 and shaft 220 are configured to rotate about an axis 290 in a direction 292. Direction 292 may be opposite that shown in FIG. 2 without departing from the scope hereof. FIG. 2 shows kinetic generator 110 in cross-sectional view, with the cross section including axis 290.

When kinetic generator 110 is implemented onboard drillship 102 (or another marine vessel or platform), control module 170 controls whether kinetic generator 110 is operating in deceleration mode, acceleration mode, or storage mode. In deceleration mode, kinetic generator 110 acts as a generator and converts kinetic energy stored in the rotation of rotor 210 to electrical energy to be delivered to a load, as managed by power management system 160. This energy conversion may be referred to as discharging kinetic generator 110. In acceleration mode, kinetic generator 110 uses electrical energy received from an external source, such as combustion generator(s) 140 or a regenerative braking system onboard drillship 102, to accelerate the rotation of rotor 210 about axis 290. This acceleration "charges" kinetic generator 110. In storage mode, kinetic generator 110 neither receives nor generates electrical energy. The direction 292 of rotation about axis 290 is the same in deceleration mode, acceleration mode, and storage mode. Kinetic generator 110 may be capable of switching between any two of these modes with a response time of less than 25 milliseconds, such as in the range between 0.1 and 50.0 milliseconds or in the range between 0.1 and 1.0 milliseconds. In one exemplary scenario, control module 170 switches the operation mode of kinetic generator 110 from acceleration mode or storage mode to a maximum power output of the deceleration mode within the response time stated above. These fast response times allow kinetic generator 110 to respond to changes in load at a time scale much faster than that achievable by combustion generators 120. Thus, kinetic generator 110 is capable of performing peak shaving and, for example, remove voltage drops caused by increases in power demand at a time scale of about a millisecond or a fraction of a millisecond. For comparison, the response time of a combustion generator is on the order of seconds or more, and the response time of a battery is on the order of about 100 milliseconds or more. Supercapacitors are capable of responding with a time scale of the order of milliseconds. However, the energy capacity of a conventional supercapacitor, or even a conventional supercapacitor array, is orders of magnitude lower than the energy capacity of kinetic generator 110. In one example, the maximum power output of kinetic generator 110 is in the range between 0.5 and 1.5 megawatt (MW), such as approximately 1.0 MW. Kinetic generator 110 may further function as an emergency supply in situations where one or more combustion generators 120 are not functional.

In certain embodiments, rotor 210 has height 212 and a cylindrical outer circumference with diameter 214. Height 212 is no greater than 3 meters, for example in the range between 1.0 and 2.5 meters such as around 1.8 meters, in some embodiments. Diameter 214 is no greater than 2.5 meters, for example in the range between 1.0 and 2.0 meters such as around 1.5 meters, in some embodiments. The weight of rotor 210 may be less than 2000 kilograms (kg), for example in the range between 1000 and 1500 kg such as around 1250 kg. Rotor 210 may be substantially composed of a carbon composite.

Kinetic generator 110 includes a magnetic induction coupling 235 that exchanges electrical energy to kinetic energy or vice versa. Magnetic induction coupling 235 converts electrical energy to rotational energy of rotor 210 or generates electrical energy from the rotational energy of rotor 210, depending on the operating mode of kinetic generator 110. Magnetic induction coupling 235 has at least two coils 230 and at least two permanent magnets 232. Magnets 232 may include or be composed of a ferromagnetic material. Magnets 232 are mechanically and rigidly coupled with rotor 210, either directly as shown in FIG. 2 and/or indirectly via shaft 220. Coils 230 are mechanically and rigidly coupled with an enclosure 270 of kinetic generator 110 and further electrically coupled with electrical circuitry not shown in FIG. 2. During rotation of rotor 210 about axis 290, magnets 232 pass by coils 230 and magnetically couple therewith. Both coils 230 and magnets 232 are arranged at different locations along direction 292.

In deceleration mode, magnets 232 rotate with rotor 210 about axis 290 and induce a current in coils 230. This current is delivered to a load as managed by power management system 160. During deceleration mode, the rotation speed of rotor 210 decreases as the kinetic energy of rotor 210 is converted to electrical energy.

In acceleration mode, an electrical current is supplied to kinetic generator 110, for example as managed by power management system 160, and passed through coils 230. This current magnetically couples with the magnetic fields generated by magnets 232 to accelerate rotor 210. Kinetic generator 110 may employ active switching of the direction of current through coils 230 to accelerate rotor 210.

Kinetic generator 110 is capable of achieving a high rotational speed. In an embodiment, rotor 210 may achieve a rotational speed of at least 15,000 revolutions per minute (rpm) about axis 290, for example approximately 50,000 rpm or between 30,000 rpm and at least 60,000 rpm. This high rotational speed enables high energy capacity of kinetic generator 110. In one embodiment, the energy capacity of kinetic generator 110 is in the range between 50 and 200 kilowatt-hours (kWh). Kinetic generator 110 is therefore capable of generating electrical energy at a significant rate for longer periods of time. As a result, kinetic generator 110 is capable of providing electric power at a short response time (as discussed above) and at a high power output and also generate power over a longer period of time (such as seconds, minutes, or longer). Kinetic generator 110 thus provides, in one device, (a) the power output and response time similar to that achievable by a supercapacitor array or a conventional flywheel and (b) longer term power generation similar to that of a battery or battery array. Due to relatively low energy capacity, supercapacitors and conventional flywheels are generally not capable of generating energy over a longer period of time (such as seconds or minutes). Furthermore, a supercapacitor array capable of producing several MW of output power would have physical dimensions that significantly exceed those characteristic of kinetic generator 110 (e.g., height 212 and diameter 214). Likewise, a battery or battery array capable of matching the energy capacity of kinetic generator 110 will have physical dimensions greatly exceeding those of kinetic generator 110. A conventional flywheel scaled up to achieve the energy capacity of kinetic generator 110 would require a flywheel with physical dimensions greatly exceeding those of rotor 210. These dimensions are not practical for implementation onboard an offshore drilling vessel or other maritime vessel, due to the limited space onboard such vessels. In addition, a conventional flywheel scaled up in size to achieve the energy capacity of kinetic generator 110 would be orders of magnitude more expensive than kinetic generator 110.

In one implementation, the energy capacity of kinetic generator 110 is approximately 100 kWh. This implementation facilitates a power output of approximately 1 MW, which matches the power rating of certain standard electrical components that may be used to interface kinetic generator 110 with an electric power bus. In another implementation, the energy capacity of kinetic generator 110 is less than 100 kWh, such as in the range between 10 kWh and 25 kWh. In this implementation, kinetic generator 110 may serve to power a single machine onboard an offshore drilling vessel (or other marine vessel).

In yet another implementation, several kinetic generators 110 cooperate to achieve a combined energy capacity of up to at least 2,000 kWh. For example, four kinetic generators 110 may have a combined energy capacity of at least 200 kWh or at least 400 kWh and a maximum power output of at least 2 MW or at least 4 MW, respectively. For such kinetic generators 110 may be implemented onboard a jackup offshore drilling rig. In another example, which may be implemented onboard a semi-submersible offshore drilling rig, twelve kinetic generators 110 cooperate to provide a combined energy capacity of at least 600 kWh or at least 1200 kWh and a maximum power output of at least 6 MW or at least 12 MW, respectively. A semi-submersible offshore drilling rig typically relies on dynamic positioning to maintain its position relative to the well and therefore present greater energy demands than a typical jackup offshore drilling rig. In a further example, sixteen kinetic generators 110 cooperate to provide a combined energy capacity of at least 800 kWh or at least 1600 kWh and a maximum power output of at least 8 MW or at least 16 MW, respectively. Such a set of sixteen kinetic generators 110 may advantageously be implemented onboard a drillship having even greater energy demands than that typically associated with a semi-submersible offshore drilling rig. It is understood that these implementations and examples are nonlimiting and that a different number of kinetic generators 110 may be implemented together to achieve a wide range of energy capacities and maximum power outputs.

In one exemplary scenario of kinetic generator 110 operating in deceleration mode for a sustained period of time, kinetic generator 110 generates 1 MW for up to approximately 2-3 minutes. In another exemplary use scenario, kinetic generator 110 performs peak-shaving to ensure stable voltage on an electrical bus. Kinetic generator 110 is capable of simultaneously (a) performing peak shaving, and (b) operating in deceleration mode for a sustained period of time, for example to handle a power demand otherwise requiring a combustion generator.

Kinetic generator 110 is capable of achieving the above stated response times, power outputs, and energy capacities in a relatively small and lightweight package (as stated above). The lightweight package ensures compatibility of kinetic generator 110 with operation onboard an offshore drilling vessel. Operation onboard an offshore drilling vessel (or other maritime vessel) is associated with spatial constraints and, due to movement of the vessel, imposes challenging demands on the structural integrity and stability of kinetic generator 110.

Kinetic generator 110 achieves the above stated performance parameters, at least in part, by being efficient. This high efficiency is facilitated by minimized air drag and minimized friction between mechanical components during rotation of rotor 210 and shaft 220, even when kinetic generator 110 is located onboard an offshore drilling vessel or other offshore/marine vessel and subject to the movements characteristic of the marine vessels or platform.

For the purpose of minimizing air drag on rotor 210, enclosure 270 may be a sealed vacuum enclosure that contains rotor 210 and shaft 220 in a vacuum environment. Enclosure 270 may also eliminate exposure to oxygen and moisture, which may extend the life of the internal components of kinetic generator 110.

For the purpose of reducing mechanical friction between rotating and stationary parts, kinetic generator 110 is configured with magnetic bearings. Kinetic generator 110 includes a lower bearing system 240, and an upper bearing system 250. Bearing systems 240 and 250 cooperate to support rotor 210 relative to enclosure 270 via shaft 220. Kinetic generator 110 is configured for rotation about a mostly vertical orientation of axis 290, that is, for rotation about axis 290 mostly parallel to the direction of gravity. However, onboard an offshore drilling vessel such as drillship 102 (or onboard another maritime vessel/platform), the orientation of axis 290 may vary significantly. Lower bearing system 240 supports the weight of rotor 210 via shaft 220. Lower and upper bearing systems 240 and 250 cooperate to stabilize the position of shaft 220 in dimensions orthogonal to axis 290. In an embodiment, at least one of lower bearing system 240 and upper bearing system 250 includes one or more active magnetic bearings, and stabilizes the position of shaft 220 in dimensions orthogonal to axis 290 at least in part by virtue of actively adjusting the active magnetic bearing(s).

Lower bearing system 240 includes one or more magnets 242 mechanically coupled with bottom plate 272, and one or more magnets 244 mechanically coupled with shaft 220 (or, alternatively, rotor 210). Magnets 242 repel magnets 244 to support the weight of rotor 210, shaft 220, and other elements attached to rotor 210 and/or shaft 220, through magnetic levitation. Magnets 242 and 244 may be permanent magnets. Alternatively, magnets 244 are permanent magnetics and magnets 242 are electromagnets. Lower bearing system 240 also includes magnetic bearings 246 that stabilize the position of shaft 220 relative to bottom plate 272 in dimensions substantially orthogonal to axis 290. Upper bearing system 250 stabilizes the position of shaft 220 relative to top plate 274 in dimensions substantially orthogonal to axis 290. Bearing systems 240 and 250 secure and stabilize shaft 220 and rotor 210 in the presence of the movement experienced onboard an offshore drilling vessel such as drillship 102 (or onboard another maritime vessel/platform).

Although for clarity not shown in FIG. 2, each of bearing systems 240 and 250 includes magnets mounted to both shaft 220 and the respective one of bottom plate 272 and top plate 274. These magnets may be configured to stabilize the position of shaft 220 relative to the respective one of bottom plate 272 and top plate 274 via repulsive or attractive magnetic forces. In one embodiment, magnetic bearings 246 includes active magnetic bearings, and magnets of magnetic bearings 246 coupled to bottom plate 272 are electrically controllable electromagnets or coils enabling active control of lower bearing system 240 to stabilize shaft 220 relative to bottom plate 272. In another embodiment, upper bearing system includes active magnetic bearings, and the magnets of upper bearing system 250 coupled to top plate 274 are electrically controllable electromagnets or coils enabling active control of upper bearing system 250 to stabilize shaft 220 relative to top plate 274. In yet another embodiment, both of magnetic bearings 246 and upper bearing system 250 include active magnetic bearings as discussed above.

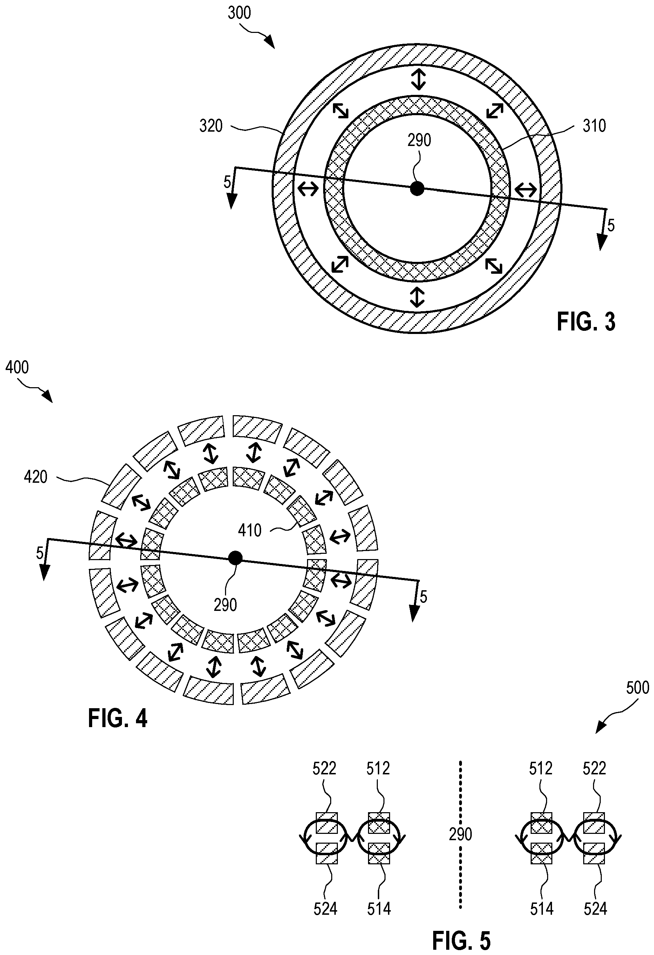

FIG. 3 illustrates an exemplary magnetic bearing 300. FIG. 3 shows magnetic bearing 300 in a viewing direction along axis 290. Magnetic bearing 300 is an embodiment of either one of upper bearing system 250 and magnetic bearing 246. Magnetic bearing 300 includes an inner magnet unit 310 and an outer magnet unit 320. Inner magnet unit 310 may be composed of one or more permanent magnets. In one embodiment, magnetic bearing 300 is a passive magnetic bearing, and outer magnet unit 320 may be composed of one or permanent magnets. In another embodiment, magnetic bearing 300 is an active magnetic bearing, and outer magnet unit 320 includes one or more electrically controllable magnetic field sources, such as one or more electromagnets or one or more coils. When implemented in kinetic generator 110, inner magnet unit 310 is coupled with shaft 220 and outer magnet unit 320 is coupled with bottom plate 272 or top plate 274. Inner magnet unit 310 and outer magnet unit 320 are configured to either attract or repel each other. By virtue of at least approximate rotational symmetry of inner magnet unit 310 and outer magnet unit 320 about axis 290, the repelling or attractive coupling between inner magnet unit 310 and outer magnet unit 320 serve to stabilize the position of shaft 220.

FIG. 4 illustrates another exemplary magnetic bearing 400 which is an embodiment of magnetic bearing 300. FIG. 4 shows magnetic bearing 400 in a viewing direction along axis 290. Magnetic bearing 400 includes a series of inner magnet units 410 (cooperating to form an embodiment of inner magnet unit 310) and a series of outer magnet units 420 (cooperating to form an embodiment of outer magnet unit 320). In one embodiment, inner magnet units 410 repel outer magnet units 420. In another embodiment, inner magnet units 410 attract outer magnet units 420. In certain embodiments, magnetic bearing 400 is an active magnetic bearing, and outer magnet units 420 include electrically controllable magnetic fields sources, such as electromagnets or coils.

FIG. 5 illustrates yet another exemplary magnetic bearing 500 which is an embodiment of either one of magnetic bearings 300 and 400. FIG. 5 shows magnetic bearing 500 in a cross sectional view taken in a direction orthogonal to axis 290, as indicated by line 5-5 in each of FIGS. 3 and 4. Magnetic bearing 500 includes one or more pairs of inner magnet units 512 and 514, and one or more pairs of outer magnet units 522 and 524. Inner magnet units 512 and 514 are configured to form a closed loop magnetic field, and form an embodiment of each of inner magnet unit 310 and 410. Outer magnet units 522 and 524 are also configured to form a closed loop magnetic field, and form an embodiment of each of outer magnet unit 320 and 420. In the embodiment shown in FIG. 5, the closed loop magnetic field of inner magnet units 512 and 514 repels the closed loop magnetic field of outer magnet units 522 and 524. However, without departing from the scope hereof, magnetic bearing 500 may be configured such that the closed loop magnetic field of inner magnet units 512 and 514 attracts the closed loop magnetic field of outer magnet units 522 and 524. Magnetic bearing 500 may implement a single continuous inner magnet unit 512, a single continuous inner magnet unit 514, a single continuous outer magnet unit 522, and a single continuous outer magnet unit 524, all of which encircle axis 290, as shown for magnetic bearing 300 in FIG. 3. Alternatively, active magnetic bearing 500 may implement a series of inner magnet units 512, a series of inner magnet units 514, a series of outer magnet units 522, and a series of outer magnet units 524, wherein each series encircles axis 290, as shown for magnetic bearing 400 in FIG. 4. In certain embodiments, magnetic bearing 500 is an active magnetic bearing, and outer magnet units 522 and 524 include electrically controllable magnetic fields sources, such as electromagnets or coils.

Referring again to FIG. 1, control module 170 controls the operation of each kinetic generator 110. Control module 170 is configured to operate each kinetic generator 110 in a high-motion mode when drillship 102 is in a state of high motion, that is, when drillship 102 moves a lot and/or is at a steady significant inclination (such as in the case of strong wind from one direction). In this high-motion mode, control module 170 limits the energy exchange with each kinetic generator 110 in order to stay within a safe operating limit of kinetic generator 110. In particular, control module 170 limits the energy exchange to (a) stay within a safe operating limit of the magnetic bearings of lower bearing system 240 and/or upper bearing system 250, (b) to avoid damage to rotor 210 or another structure component of kinetic generator 110, and/or (c) to avoid damage to the foundation of kinetic generator 110 (e.g., the floor or support on which kinetic generator 110 is placed).

The magnetic bearings keep shaft 220 from coming into physical contact with either one of bottom plate 227 and top plate 274. More specifically, the active magnetic bearings at least partly counteract forces causing shaft 220 to move toward contact with bottom plate 227 and/or top plate 274. Such forces include external forces such as waves, ocean current, and wind causing the marine vessels or platform, e.g., a room onboard drillship 102, to move. These forces also include internal forces caused by deceleration or acceleration of rotor 210.

Due to the generally high moment of inertia carried by rotor 210, forces applied to the foundation of kinetic generator 110 may be substantial when kinetic generator 110 is subject to external or internal forces working to change the orientation of axis 290. For example, sudden decelerations and accelerations associated with peak-shaving by kinetic generator 110 create significant forces on the foundation of kinetic generator 110.

When drillship 102 is in a state of low motion, the magnetic bearings are capable of sufficiently counteracting both the internal and the external forces. In this state of low-motion, control module 170 may operate each kinetic generator 110 in a low-motion mode that allows deceleration and acceleration of rotor 210 at respective maximum rates. However, when drillship 102 is in a state of high motion, the magnetic bearings need to generate significant forces to counteract external forces, and both structural components of kinetic generator 110 and the foundation of kinetic generator 110 need to withstand increased forces. In this state of high motion, control module 170 limits the degree of allowable deceleration and/or acceleration of rotor 210 in order to reduce the forces that the magnetic bearings would need to generate in order to counteract the internal forces and/or reduce the forces on structural components of kinetic generator 110 as well as the foundation. This motion-state dependent operation prevents damage to the foundation and greatly reduces the requirements to the magnetic bearings. For example, in embodiments of kinetic generator 110 implementing active magnetic bearings, the requirements to these active magnetic bearings are reduced, as compared to hypothetical active magnetic bearings capable of handling both internal and external forces when the marine vessels or platform is in a state of high motion. As a result, active magnetic bearings of kinetic generator 110 may be smaller, cheaper, and lighter than the hypothetical active magnetic bearings capable of handling both internal and external forces when the marine vessels or platform is in a state of high motion.

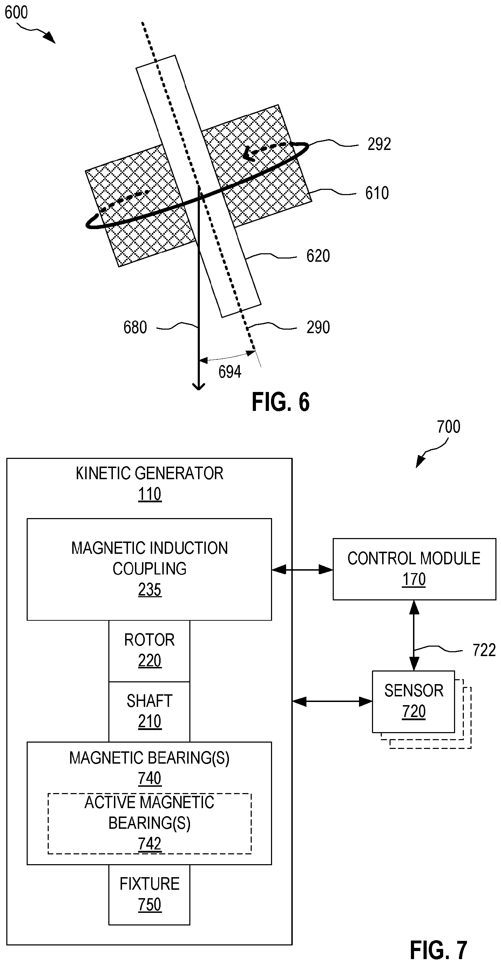

FIG. 6 schematically illustrates inclination of one exemplary kinetic generator 600. Kinetic generator 600 is an embodiment of kinetic generator 110 and has a rotor 610 mounted to a shaft 620. Rotor 610 and shaft 620 rotate about axis 290. In the diagram shown in FIG. 6, axis 290 has inclination 694 relative to the direction of gravity 680. In actual use, this inclination may be static or dynamic, or a combination thereof. Herein, "static inclination" refers to a substantially constant inclination such as experienced when the marine vessels or platform is subject to a strong steady wind, or in the case of kinetic generator 600 being installed in the marine vessels or platform at a permanent inclination (for example caused by an uneven floor). Herein, "dynamic inclination" refers to oscillating inclination, or other regularly or irregularly changing inclination, such as experienced when the marine vessels or platform is subject to waves.

A commonly accepted design requirement for offshore equipment specifies that offshore equipment should be operational at a dynamic inclination of up to 22.5 degrees and a static inclination of up to 25 degrees. In one embodiment, kinetic generator 110 is configured to match this commonly accepted design requirement, and control module 170 is configured to impose limitations on the operation of kinetic generator 110 when either one of the dynamic inclination and the static inclination exceeds this respective limit. Without departing from the scope hereof, the stated thresholds of 22.5 degrees and 25 degrees may be replaced by other suitable thresholds depending, for example, on the use scenario. In one implementation, kinetic generator 110 may be capable of performing some degree of energy generation, possibly at a reduced discharge rate, at inclinations up to approximately 45 degrees, such as in the range between 40 and 50 degrees.

FIG. 7 is a block diagram of one exemplary kinetic generator system 700 configured for implementation on a marine vessels or platform such as onboard drillship 102. Kinetic generator system 700 includes kinetic generator 110, control module 170, and at least one sensor 720. Control module 170 determines the motion state of the marine vessels or platform of kinetic generator 110 based upon sensor signals 722 generated by sensor(s) 720. Based upon this determination, control module 170 imposes a limit on the energy exchange by magnetic induction coupling 235. For example, in a dual-mode operation scheme, control module 170 either (a) allows energy exchange by magnetic induction coupling 235 at rates up to maximum rates allowed in "normal" operation, to operate kinetic generator 110 in a low-motion mode, or (b) limits one or both directions of energy exchange by magnetic induction coupling 235 to a lower rate than what is allowed in the low-motion mode, to operate kinetic generator 110 in a high-motion mode. Although shown in FIG. 7 as being external to kinetic generator 110, one or more of sensors 720 may be integrated in kinetic generator 110, without departing from the scope hereof.

In one embodiment, each sensor 720 is coupled to a fixture 750, another non-rotor portion of kinetic generator 110, or the local environment of kinetic generator such as to a structure rigidly coupled to kinetic generator 110. Fixture 750 may include one or more of bottom plate 272, top plate 274, and enclosure 270. In this embodiment, sensor 720 is an inclination sensor or an accelerometer, for example. In this embodiment, control module 170 may receive, as sensor signal 722, inclination 694 of kinetic generator 110 or another motion characteristic of a non-rotor portion of kinetic generator 110, or control module 170 may process one or more sensor signals 722 to determine inclination 694 (or an associated parameter) or another motion characteristic of a non-rotor portion of kinetic generator 110. In embodiments, wherein sensor 720 is an inclination sensor, sensor 720 may be a fluid-based inclination sensor or a microelectromechanical system (MEMS) based inclination sensor. Kinetic generator system 700 may determine static inclination 694 or dynamic inclination 694, or both. In embodiments, wherein sensor 720 is an accelerometer, control module 170 may process one or more sensor signals 722 to deduce a motion characteristic of the marine vessels or platform. This motion characteristic may be an inclination , an acceleration rate, or another motion characteristic.

In another embodiment, sensor 720 is a current sensor that measures a current of one or more active magnetic bearings 742 of of magnetic bearings 740 of kinetic generator 110. Magnetic bearings 740 may embody lower bearing system 240 and upper bearing system 742. Active magnetic bearing(s) 742 may be implemented as magnetic bearings 246 and/or upper bearing system 250. In this embodiment, control module 170 determines the motion state of the marine vessels or platform from one or more current measurements generated by sensor 720. For example, control module 170 may determine that the marine vessels or platform is in a state of high motion, when the measured current exceeds a threshold current. Based upon the determination of the state of the marine vessels or platform, control module 170 imposes a limit on the energy exchange by magnetic induction coupling 235, as discussed above.

In yet another embodiment, kinetic generator system 700 includes a combination of inclination sensors/accelerometers and current sensors.

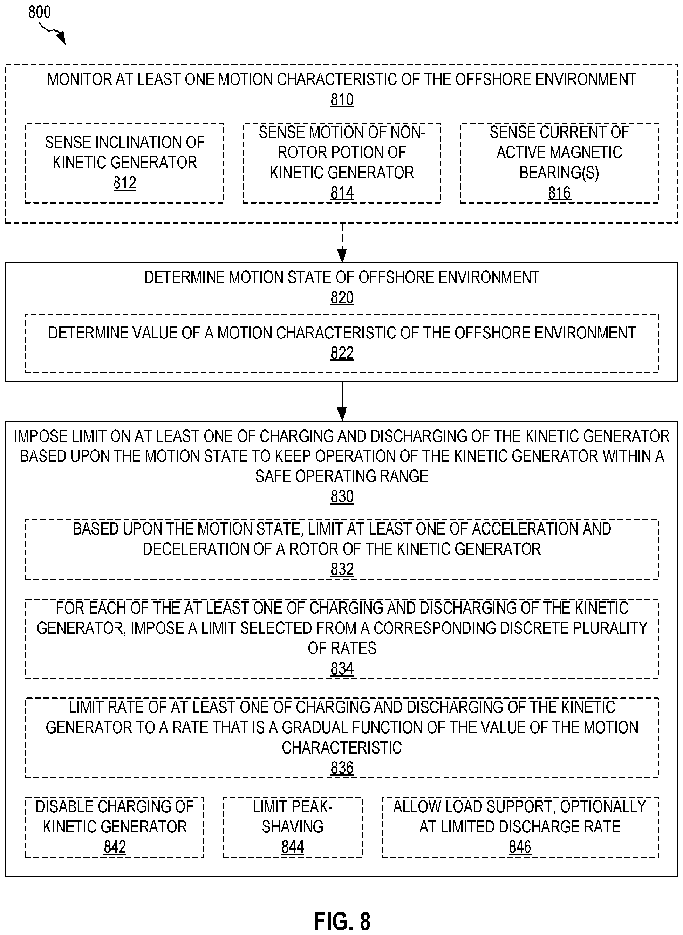

FIG. 8 illustrates one exemplary motion-state dependent method 800 for operating a kinetic generator on a marine vessels or platform. Method 800 may be performed by kinetic generator system 700. Certain embodiments of method 800 may be performed by control module 170. Method 800 may be performed onboard drillship 102 (or another offshore/maritime vessel) as discussed above in reference to FIG. 1.

A step 820 determines the motion state of the marine vessels or platform. Step 820 may determine an inclination (static or dynamic) of the kinetic generator, a rate of acceleration of a non-rotor portion of the kinetic generator, and/or another parameter correlated to the motion state of the marine vessels or platform. In one example of step 820, control module 170 determines the motion state of the marine vessels or platform from one or more sensor signals 722 as discussed above in reference to FIG. 7.

A step 830 imposes a limit on at least one of charging and discharging of the kinetic generator based upon the motion state of the marine vessels or platform, to keep the kinetic generator within a safe operating range. In one example of step 830, control module 170 imposes a limit on charging and/or discharging of kinetic generator 110 via magnetic induction coupling 235.

Step 830 may include a step 832 of, based upon the motion state of the marine vessels or platform, limiting at least one of acceleration and deceleration of the rotor of the kinetic generator. In one example of step 832, control module 170 defines limits for one or both of the rate of acceleration and the rate of deceleration of rotor 210.

Typically, a kinetic generator may be operated in a variety of modes including, but not limited to, (a) a "start-up mode" where the revolutions of the rotor are too slow for energy generation (deceleration of the rotor), (b) a "ready mode" where the kinetic generator is capable of at least some degree of discharging or charging, and (c) a "disabled mode" where the kinetic generator is disabled, for example, due to unfavorable environmental conditions such as too high motion. In one embodiment, method 800 is configured to define two or more discrete "ready modes" for the kinetic generator according to the motion state of the marine vessels or platform. In this embodiment, step 830 includes a step 834 of imposing a limit on one or both of charging rate and discharging rate of the kinetic generator. For each of charging and discharging, step 834 selects this rate limit from a corresponding discrete plurality of rates. For example, step 834 selects increasingly lower rate limits as the motion of the marine vessels or platform gets greater. In one example of step 834, control module 170 imposes, for each of for each of the at least one of charging and discharging of kinetic generator 110, a limit selected from a corresponding discrete plurality of rates.

In another embodiment, method 800 is configured to define a gradual progression of "ready modes". In this embodiment, step 820 includes a step 822, and step 830 includes a step 836. Step 822 determines the value of a motion characteristic of the marine vessels or platform, for example an inclination, an acceleration, or a current of an active magnetic bearing. Step 836 limits charging and/or discharging of the kinetic generator to a respective rate that is a gradual function of the value of the motion characteristic. This gradual function may be a continuous function or a smooth function. In one example of this embodiment, control module 170 (a) in step 822 determines a motion characteristic value of the marine vessels or platform based upon one or more sensor signals 722, and (b) in step 836 applies a gradual function to the motion characteristic value to calculate a charge rate limit for kinetic generator 110 and/or applies a gradual function to the motion characteristic value to calculate a discharge rate limit for kinetic generator 110.

Without departing from the scope hereof, method 800 may implement all of steps 822, 834, and 836. For example, method 800 may define a low-motion "ready mode" associated with the marine vessels or platform being in a state of low motion, a high-motion "ready mode" associated with the marine vessels or platform being in a state of high motion, and a gradual transition between the low-motion and high-motion "ready modes".

In certain embodiments, step 830 includes one or more of steps 842, 844, and 846 and performs one or more of these when step 820 determines that the marine vessels or platform is in a state of high motion (for example, when an inclination, acceleration, or current of active magnetic bearing exceeds a threshold). Step 842 disables charging of the kinetic generator. In one example of step 842, control module 170 prevents charging of kinetic generator 110 via magnetic induction coupling 235 to avoid the forces generated by the associated acceleration of rotor 210. Step 844 limits the peak-shaving capability of the kinetic generator. In one example of step 844, control module 170 reduces the rate of allowed energy exchange by magnetic induction coupling 235. Step 844 may entirely disable peak-shaving by the kinetic generator. Step 846 allows a steady load support. Step 846 may allow emergency operation of the kinetic generator to replace one or more disabled combustion generators. In one example of step 844, control module 170 discharges kinetic generator 110 via magnetic induction coupling 235 to support a relatively steady load as dictated by power management system 160. The discharge rate of step 846 may be limited to a value less than that of step 836.

In one embodiment, method 800 further includes a step 810 of monitoring at least one motion characteristic of the marine vessels or platform. In one example of step 810, one or more sensors 720 measures a motion characteristic of the marine vessels or platform, as discussed above in reference to FIG. 7. Step 810 may include one or more of steps 812, 814, and 816. Step 812 senses the inclination of the kinetic generator. In one example of step 812, one or more sensors 720 measure inclination 694 or a related parameter, as discussed above in reference to FIG. 7. Step 814 senses motion of a non-rotor portion of the kinetic generator. In one example of step 814, one or more accelerometers (embodiments of sensor 720) measures acceleration of the marine vessels or platform of kinetic generator 110, as discussed above in reference to FIG. 7. Step 816 senses a current of one or more active magnetic bearings of the kinetic generator. In one example of step 816, sensor 720 measures a current of active magnetic bearing(s) 740, as discussed above in reference to FIG. 7.

It is understood that method 800 may perform steps 810, 820, and 830 concurrently and/or repeatedly to continuously or regularly reevaluate the motion state of the marine vessels or platform and impose limits on the operation of the kinetic generator according to changes in the motion state of the marine vessels or platform. In one embodiment, step 830 imposes a different limit only after that the marine vessels or platform has been in a motion state associated with this different limit for a certain period of time. This embodiment prevents frequent switches between different operation modes in marginal conditions. Without departing from the scope hereof, step 830 may be initiated according to a manual user input. For example a user may force step 830 to perform one or more of steps 842, 844, and 846.

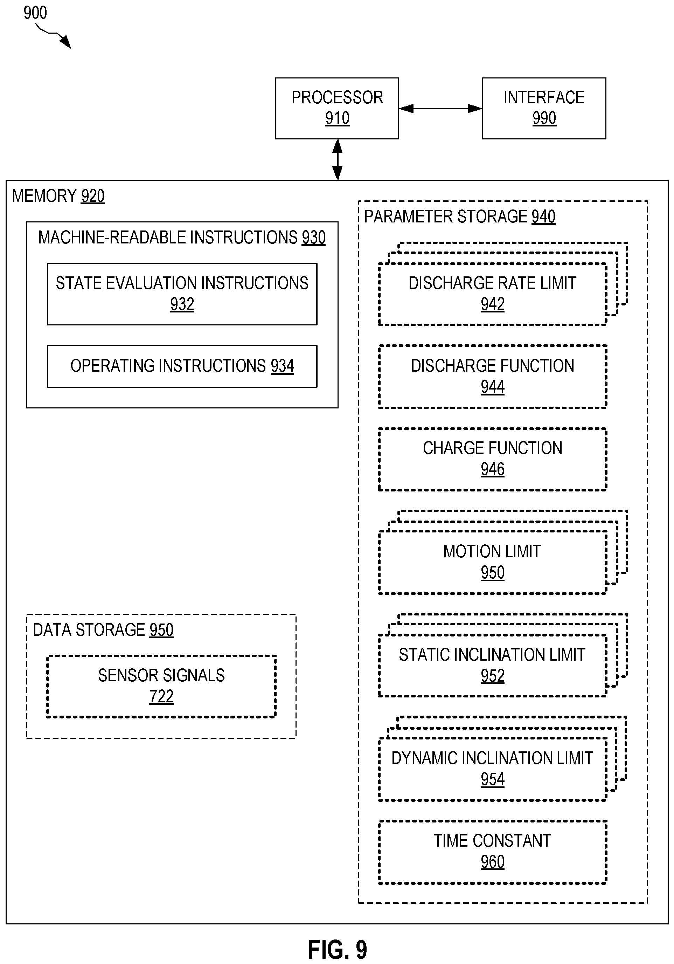

FIG. 9 illustrates one exemplary control module 900 for motion-state dependent operation of a kinetic generator on a marine vessels or platform. Control module 900 is an embodiment of control module 170. Control module 900 is capable of performing steps 820 and 830 of method 800.

Control module 900 includes a processor 910, a non-transitory memory 920, and an interface 990. Memory 920 includes machine-readable instructions 930, optionally encoded in a non-volatile portion of memory 920. Machine-readable instructions 930 include state evaluation instructions 932 and operating instructions 934. Memory 920 may further include a parameter storage 940 that stores operating parameters. In addition, memory 920 may include a data storage 950 that stores one or more sensor signals 722 received from sensor(s) 270 via interface 990.

In operation, processor 910 executes state evaluation instructions 932 to process a sensor signal 722 received via interface 990, to determine a motion state of the marine vessels or platform. Processor 910 hereby performs an example of step 820 of method 800. Execution of state evaluation instructions 932 may include comparing a measured inclination to a static inclination limit 944 (or a discrete plurality of static inclination limits 944) or dynamic inclination limit 946 (or a discrete plurality of static inclination limits 944) retrieved from parameter storage 940. Alternatively, or in combination therewith, the execution of state evaluation instructions 932 may include comparing another measured motion characteristic to a motion limit 944 retrieved from parameter storage 940. This motion characteristic is, for example, acceleration of a non-rotor portion of kinetic generator 110 or a current of an active magnetic bearing of kinetic generator 110.

Next, processor 910 executes operating instructions 934 to impose a limit on at least one of charging and discharging of the kinetic generator based upon the motion state to keep the kinetic generator within a safe operating range. For this purpose, processor 910 may retrieve one or more operating parameters from parameter storage 940. For example, operating instructions 934 may be configured to retrieve one of a plurality of discharge rate limits 942 (and/or similar charge rate limit) from parameter storage 940 based upon the motion state of the marine vessels or platform. In another example, operating instructions 934 are configured to retrieve one or both of a discharge function 944 and a charge function 946 from parameter storage 940 and apply each such function to a motion characteristic value determined by execution of state evaluation instructions 932, so as to determine one or both of corresponding discharge rate and charge rate limits for the kinetic generator. Execution of operating instructions 934 by processor 910 is an embodiment of step 830 of method 800. Execution of operating instructions 934 by processor 910 may further include communicating control signals via interface 990 to magnetic induction coupling 235 (or associated circuitry).

In one embodiment, parameter storage 940 includes a time constant 960 and state evaluation instructions 932 are configured to (a) process a temporal series of sensor signals 722 and (b) impose a different limit, only upon establishing, from processing of the temporal series of sensor signals 722, that the marine vessels or platform has been in a state associated with the different limit for a duration corresponding to time constant 948.

In an embodiment, control module 900 is configured to, upon receiving a user input via interface 990, executing operating instructions 934 based upon a motion state indicated by the user input.

Without departing from the scope hereof, control module 900 may be at least partly implemented in firmware. Also without departing from the scope hereof, machine-readable instructions 930, and optionally some or all or parameter storage 940, may be provided as a standalone software product for use with a third-party processor and interface.

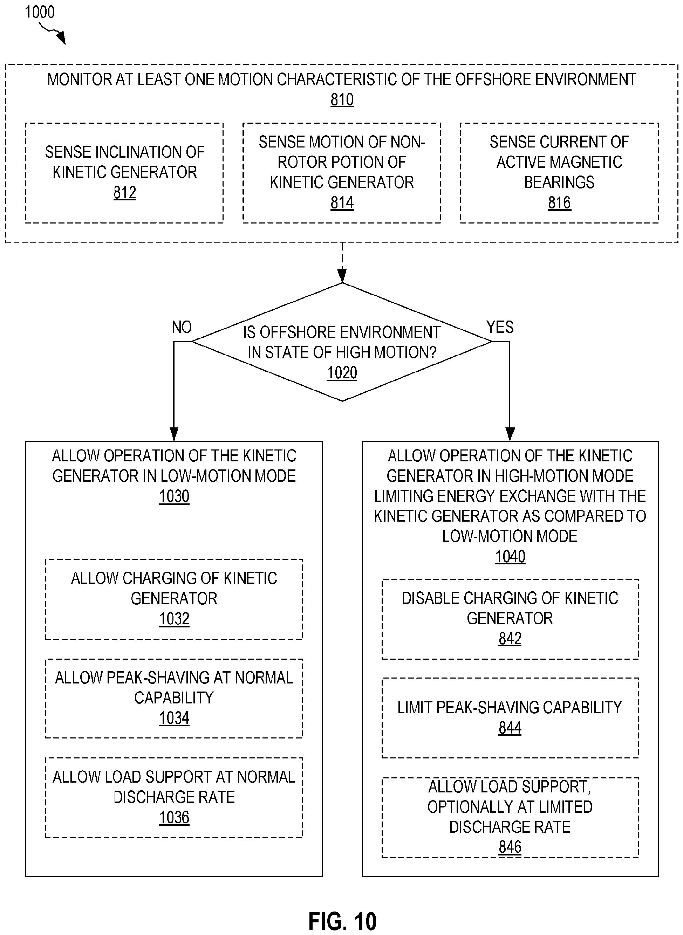

FIG. 10 illustrates one exemplary dual-mode method 1000 for operating a kinetic generator on a marine vessels or platform. Method 1000 may be performed by kinetic generator system 700. Certain embodiments of method 1000 may be performed by control module 170. Method 800 may be performed onboard drillship 102 (or another offshore/maritime vessel) as discussed above in reference to FIG. 1. Method 1000 is an embodiment of method 800.

A step 1020 determines if the marine vessels or platform is in a state of high motion. Step 1020 is similar to step 820 except for being limited to only two possible motion states, namely high motion and low motion, of the marine vessels or platform. If step 1020 determines that the marine vessels or platform is in a state of high motion, method 1000 proceeds to step 1040. If step 1020 determines that the marine vessels or platform is not in a state of high motion, method 1000 proceeds to step 1030. Steps 1030 and 1040 cooperate to form an embodiment of step 830 and may be performed by control module 170.

Step 1030 allows operation of the kinetic generator in a low-motion mode when the marine vessels or platform. Step 1040 allows operation of the kinetic generator in a high-motion mode. As compared to step 1030, step 1040 limits some functionality of the kinetic generator in order to stay within a safe operating limit of the kinetic generator in the presence of the increased forces associated with offshore environment being in a state of high motion. Step 1040 may limit such functionality of the kinetic generator in order to (a) stay within a safe operating limit of active magnetic bearings of the kinetic generator and/or (b) to avoid damage to structural components of the kinetic generator and the foundation of the kinetic generator.

In one embodiment, step 1030 allows acceleration and deceleration of a rotor of the kinetic generator up to at least a first acceleration limit and a first deceleration limit, respectively, while step 10450 limits acceleration and deceleration of the rotor to a second acceleration limit and a second deceleration limit, respectively, wherein at least one of the second acceleration limit and the second deceleration limit is less than the corresponding first acceleration limit and first deceleration limit.

Step 1030 may include steps 1032, 1034, and/or 1036. Step 1032 allows charging of the kinetic generator. In one example of step 1032, control module 170 allows charging of kinetic generator 110 (acceleration of rotor 210) via magnetic induction coupling 235. Step 1034 allows peak-shaving at the normal peak shaving capability of the kinetic generator. In one example of step 1034, control module 170 allows magnetic induction coupling 235 to rapidly decelerate rotor 210 (discharge kinetic generator 110), and optionally rapidly accelerate rotor 210 (charge kinetic generator 110), to perform peak shaving as dictated by power management system 160. Step 1036 allows load support at normal discharge rate of the kinetic generator. In one example of step 1036, control module 170 allows discharging of kinetic generator 110 (decelerates rotor 210) via magnetic induction coupling 235 to support a relatively steady load as dictated by power management system 160. Step 1036 may be implemented, for example, when one or more combustion generators 120 are disabled and kinetic generator 110 is needed as an emergency generator.

Step 1040 may include steps 842, 844, and/or 846, as discussed above in reference to FIG. 8

In certain embodiments, method 1000 further includes step 810, as discussed above in reference to FIG. 8.

It is understood that method 1000 may perform steps 810, 1020, and one of steps 1030 and 1040 concurrently and/or repeatedly to continuously or regularly reevaluate the state of the marine vessels or platform and switch between the low-motion mode and the high-motion mode accordingly. In one embodiment, step 1020 allows a switch from a present one of the low-motion mode and the high-motion mode to the other one of the low-motion mode and the high-motion mode, only after that the marine vessels or platform has been in the state associated with the other one of the low-motion mode and the high-motion mode for a certain period of time. This embodiment prevents frequent switches in marginal conditions. Without departing from the scope hereof, step 1020 may switch between steps 1030 and 1040 based upon a manual user input.

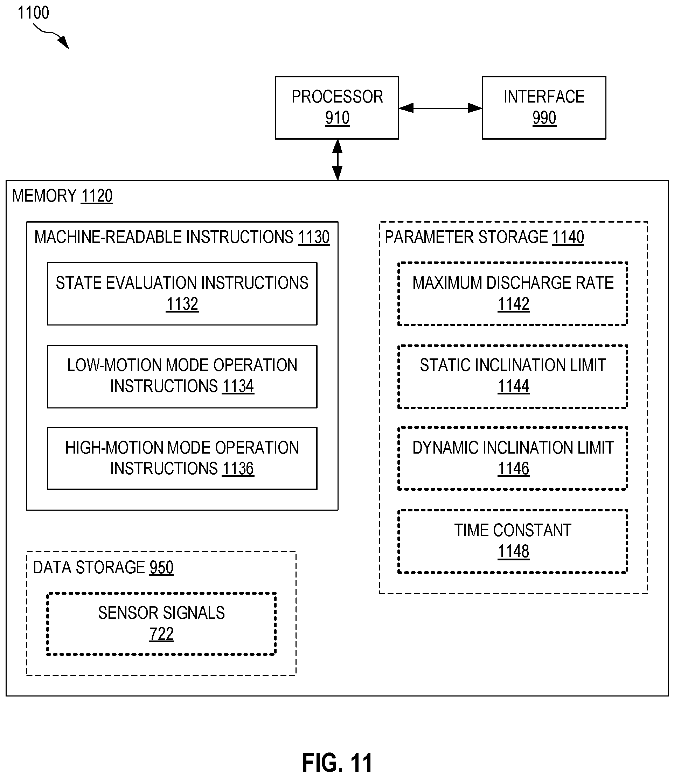

FIG. 11 illustrates one exemplary control module 1100 for dual-mode operation of a kinetic generator on a marine vessels or platform. Control module 1100 is an embodiment of control module 170. Control module 1100 is capable of performing steps 1020, 1030, and 1040 of method 1000.

Control module 900 includes processor 910, a non-transitory memory 1120, and interface 990. Memory 1120 includes machine-readable instructions 1130, optionally encoded in a non-volatile portion of memory 1120. Machine-readable instructions 1130 include state evaluation instructions 1132, low-motion mode operation instructions 1134, and high-motion mode operation instructions 1136. Memory 1120 may further include a parameter storage 1140 that stores operating parameters. In addition, memory 1120 may include a data storage 950.

In operation, processor 910 executes state evaluation instructions 932 to process a sensor signal 722 received via interface 990, to determine if the marine vessels or platform is in a state of low motion or a state of high motion. Processor 910 thereby performs an example step 1020 of method 1000. Execution of state evaluation instructions 1132 may include comparing a measured inclination to a static inclination limit 944 or dynamic inclination limit 946 retrieved from parameter storage 940. If the marine vessels or platform is in a state of low motion, processor 910 executes low-motion operation instructions 1134 to allow operation of kinetic generator 110 in a low-motion mode. For this purpose, processor 910 may communicate control signals via interface 990 to magnetic induction coupling 235 (or associated circuitry). Execution of low-motion mode instructions 1134 by processor 910 is an example of step 1030 of method 1000. If the marine vessels or platform is in a state of high motion, processor 910 executes high-motion operation instructions 1136 to allow operation of kinetic generator 110 in a high-motion mode. For this purpose, processor 910 may communicate control signals via interface 990 to magnetic induction coupling 235 (or associated circuitry). In one implementation, execution of high-motion operation instructions 936 includes retrieving a maximum discharge rate 942 from parameter storage 940 and sending a corresponding control signal to magnetic induction coupling 235 (or associated circuitry) to limit the discharge rate of kinetic generator 110. Execution of high-motion mode instructions 1136 by processor 910 is an example of step 1040 of method 1000.

In one embodiment, parameter storage 1140 includes a time constant 1148 and state evaluation instructions 1132 are configured to (a) process a temporal series of sensor signals 722 and (b) switch from a present one of the low-motion mode and the high-motion mode to the other one of the low-motion mode and the high-motion mode, only upon establishing, from processing of the temporal series of sensor signals 722, that the marine vessels or platform has been in a state associated with the other one of the low-motion mode and the high-motion mode for a duration corresponding to time constant 1148.

In an embodiment, control module 1100 is configured to, upon receiving a user input via interface 990, execute either low-motion mode operation instructions 1134 or high-motion mode operation instructions 1136 according to the user input.

Without departing from the scope hereof, control module 1100 may be at least partly implemented in firmware. Also without departing from the scope hereof, machine-readable instructions 1130, and optionally some or all or parameter storage 1140, may be provided as a standalone software product for use with a third-party processor and interface.

## Claims

1. A control system for motion-state dependent operation of a kinetic generator (110; 600) on a marine vessel or platform (102), comprising:
- a processor (910) configured to be communicatively coupled to the kinetic generator (110; 600);
- an interface (990) coupled communicatively with the processor (910); and
- a non-transitory memory (920) including machine-readable instructions;
**characterized in**
- **that** the interface (990) is adapted for receiving a sensor signal indicative of a motion characteristic of the marine vessel or platform (102); and
- **that** the processor (910), upon execution of the machine-readable instructions, is adapted to perform steps of:
∘ processing the sensor signal to determine a motion state of the marine vessel or platform (102), and
∘ imposing a limit on at least one of charging and discharging of the kinetic generator (110; 600) based upon the motion state to keep the kinetic generator (110; 600) within a safe operating range.

2. The control system according to claim 1, **characterized in that** the machine-readable instructions are configured to, upon execution by the processor (910) and when said processing determines that the marine vessel or platform (102) is in a state of high motion, disable charging of the kinetic generator (110; 600).

3. The control system according to claims 1-2, **characterized in that** the non-transitory memory (920) further includes at least one of:
(i) a discharge function (944) defining a discharge rate limit as a function of a value of a motion characteristic of the marine vessel or platform (102) and
(ii) a charge function (946) defining a charge rate limit as a function of a value of a motion characteristic of the marine vessel or platform (102),
- the machine-readable instructions being configured to, upon execution by the processor (910), process the sensor signal to determine the value of the motion characteristic and apply at least one of the discharge function (944) and the charge function (946) to impose at least one of the discharge rate limit and the charge rate limit.

4. The control system according to claims 1-3, **characterized in**
- **that** the non-transitory memory further includes at least one inclination limit,
- **that** the machine-readable instructions are configured to, upon execution by the processor, process the sensor signal to determine an inclination of the kinetic generator, and based upon comparison of the inclination with the at least one inclination limit at least one of charging and discharging of the kinetic generator, and
- **that** the at least one inclination limit includes a static inclination limit and a dynamic inclination limit,
- wherein the machine-readable instructions are configured to, upon execution by the processor,
(i) process the sensor signal to determine both static and dynamic inclination of the kinetic generator, and
(ii) when at least one of the static inclination and the dynamic inclination exceeds the static inclination limit and a dynamic inclination limit, respectively, limit at least one of charging and discharging of the kinetic generator to a rate that is less than a corresponding rate associated with the static inclination and dynamic inclination both being below their respective thresholds.

5. A kinetic generator system for motion-state dependent operation of a kinetic generator (110, 600) on a marine vessel or platform (102), comprising:
- one or more kinetic generators (110, 600) including a rotor (610) and a magnetic induction coupling capable of:
(a) accelerating rotation of the rotor (610) to convert electrical energy to kinetic energy stored in the one or more kinetic generators (110, 600) and
(b) decelerating rotation of the rotor (610) to generate electrical energy from stored kinetic energy;
**characterized in** comprising:
- at least one sensor (720) for generating one or more sensor signals indicating at least one motion characteristic of the marine vessel or platform (102); and
- a control module (900) for:
(a) based upon the one or more sensor signals, determining a motion state of the marine vessel or platform (102), and
(b) imposing a limit on at least one of rate of said accelerating and rate of said decelerating based upon the motion state, to keep the one or more kinetic generators (110, 600) within a safe operating range,
wherein the control module (900) comprises:
a processor (910) configured to be communicatively coupled to the kinetic generator (110; 600);
an interface (990) coupled communicatively with the processor (910); and
a non-transitory memory (920) including machine-readable instructions.

6. The kinetic generator system according to claim 5, **characterized in that** the at least one sensor (720) includes an inclination sensor coupled to a non-rotor portion of the one or more kinetic generators (110, 600) or positioned in local environment of the kinetic generators (110, 600).

7. A microgrid electric power generation system, comprising:
- an electric power bus;
- one or more a combustion generator (120) electrically coupled to the electric power bus; and one or more kinetic generator systems (700) according to claim 5 or claim 6 each comprising one or more kinetic generators (110, 600) capable of:
(a) delivering energy stored therein to the electric power bus, and
(b) storing energy from the electric power bus in kinetic form.

8. A motion-state dependent method (800) for operating a kinetic generator on a marine vessel or platform, said kinetic generator configured to
(a) convert electric energy, supplied thereto, to kinetic energy of a rotor of the kinetic generator and
(b) convert stored kinetic energy of said rotor to electrical energy when an electrical energy output from the kinetic generator is required,
**characterized in** comprising:
- determining (820) a motion state of the marine vessel or platform; and
- imposing (830) a limit on at least one of charging and discharging of the kinetic generator based upon the motion state to keep the kinetic generator within a safe operating range, by using the control system of claim 1.

9. The method according to claim 8, **characterized in that** the step of imposing comprises, based upon the motion state, limiting (832) at least one of acceleration and deceleration of a rotor of the kinetic generator.

10. The method according to claim 8 or claim 9, **characterized in that** the step of imposing comprises, for each of the at least one of charging and discharging of the kinetic generator, imposing a limit (834) selected from a corresponding discrete plurality of rates.

11. The method according to claim 1, **characterized in** comprising:
- in the step of determining, determining value of a motion characteristic of the marine vessel or platform (822); and
- in the step of imposing, limiting rate of at least one of charging and discharging of the kinetic generator to a rate that is a gradual function of the value of the motion characteristic (836).

12. The method according to claims 8-11 **characterized in that** the step of imposing comprises, when the marine vessel or platform is in a state of high motion, allowing load support by the kinetic generator with a deceleration rate of the rotor limited to less than a corresponding deceleration rate allowed when the marine vessel or platform is in a state of less motion (846).

13. The method according to claims 8-12 and further comprising monitoring at least one motion characteristic of the marine vessel or platform, **characterized in that** the step of imposing comprises automatically changing operation mode of the kinetic generator based upon said monitoring, and that the step of automatically changing comprising changing from a present operation mode of the kinetic generator upon consistently sensing, over a predefined duration of the step of monitoring, that the at least one motion characteristic is associated with another operation mode of the kinetic generator.

14. The method according to claim 13, **characterized in that** the step of monitoring comprises sensing motion (814) or inclination angle (812) of at least one of a non-rotor portion of kinetic generator and a local environment of kinetic generator, and that the step of monitoring comprising measuring a current of an active magnetic bearing (816).

15. The method according to claims 8-14, **characterized in** comprising:
- in the step of determining, comparing static inclination and dynamic inclination of the marine vessel or platform to respective thresholds; and
- in the step of imposing, when at least one of the static inclination and the dynamic inclination exceeds its threshold, limiting at least one of charging and discharging of the kinetic generator to a rate that is less than a corresponding rate associated with the static inclination and dynamic inclination both being below their respective thresholds.

## Patentansprüche

1. Steuersystem für den bewegungszustandsabhängigen Betrieb eines kinetischen Generators (110; 600) auf einem Seeschiff oder einer Seeplattform (102), das Folgendes umfasst:
- einen Prozessor (910), der zum kommunikativen Koppeln mit dem kinetischen Generator (110; 600) konfiguriert ist;
- eine Schnittstelle (990), die kommunikativ mit dem Prozessor (910) gekoppelt ist; und
- einen nichtflüchtigen Speicher (920), der maschinenlesbare Befehle einschließt;
**dadurch gekennzeichnet,**
- **dass** die Schnittstelle (990) zum Empfangen eines Sensorsignals ausgelegt ist, das eine Bewegungscharakteristik des Seeschiffs oder der Seeplattform (102) angibt; und
- **dass** der Prozessor (910) bei Ausführung der maschinenlesbaren Befehle ausgelegt ist zum Ausführen der folgenden Schritte:
∘ Verarbeiten des Sensorsignals zum Bestimmen eines Bewegungszustands des Seeschiffs oder der Seeplattform (102), und
∘ Auferlegen eines Limits für mindestens eines von dem Laden und dem Entladen des kinetischen Generators (110; 600) auf der Basis des Bewegungszustands, um den kinetischen Generator (110; 600) innerhalb eines sicheren Betriebsbereichs zu halten.

2. Steuersystem nach Anspruch 1, **dadurch gekennzeichnet, dass** die maschinenlesbaren Befehle, bei der Ausführung durch den Prozessor (910) und wenn bei der Verarbeitung festgestellt wird, dass das Seeschiff oder die Seeplattform (102) in einem Zustand hoher Bewegung ist, zum Deaktivieren des Ladens des kinetischen Generators (110; 600) konfiguriert sind.

3. Steuersystem nach einem der Ansprüche 1-2, **dadurch gekennzeichnet, dass** der nichtflüchtige Speicher (920) ferner mindestens eines von Folgendem einschließt:
(i) einer Entladefunktion (944), die ein Entladeratenlimit in Abhängigkeit von einem Wert einer Bewegungscharakteristik des Seeschiffs oder der Seeplattform (102) definiert und
(ii) einer Ladefunktion (946), die ein Laderatenlimit in Abhängigkeit von einem Wert einer Bewegungscharakteristik des Seeschiffs oder der Seeplattform (102) definiert,
- wobei die maschinenlesbaren Befehle bei Ausführung durch den Prozessor (910) zum Verarbeiten des Sensorsignals konfiguriert sind, um den Wert der Bewegungscharakteristik zu bestimmen und mindestens eines von der Entladefunktion (944) und der Ladefunktion (946) zum Auferlegen von mindestens eines von dem Entladeratenlimit und dem Laderatenlimit anzuwenden.

4. Steuersystem nach einem der Ansprüche 1-3, **dadurch gekennzeichnet,**
- **dass** der nichtflüchtige Speicher ferner mindestens ein Neigungslimit einschließt,
- **dass** die maschinenlesbaren Befehle bei Ausführung durch den Prozessor zum Verarbeiten des Sensorsignals konfiguriert sind, um eine Neigung des kinetischen Generators zu bestimmen und auf der Basis eines Vergleichs der Neigung mit dem mindestens einen Neigungslimit mindestens eines von den kinetischen Generator zu laden und zu entladen, und
- **dass** das mindestens eine Neigungslimit ein statisches Neigungslimit und ein dynamisches Neigungslimit einschließt,
- wobei die maschinenlesbaren Befehle so konfiguriert sind, dass sie bei Ausführung durch den Prozessor
(i) das Sensorsignal verarbeiten, um sowohl die statische als auch die dynamische Neigung des kinetischen Generators zu bestimmen, und
(ii) wenn mindestens eines von der statischen Neigung und der dynamischen Neigung das statische Neigungslimit bzw. das dynamische Neigungslimit überschreitet, mindestens eines von dem Laden und dem Entladen des kinetischen Generators auf eine Rate zu begrenzen, die geringer ist als eine entsprechende Rate, die mit der statischen Neigung und der dynamischen Neigung assoziiert ist, die beide unter ihren jeweiligen Schwellenwerten liegen.

5. Kinetisches Generatorsystem für den bewegungszustandsabhängigen Betrieb eines kinetischen Generators (110, 600) auf einem Seeschiff oder einer Seeplattform (102), das Folgendes umfasst:
- einen oder mehrere kinetische Generatoren (110, 600), einen Rotor (610) und eine magnetinduktiven Kopplung mit den folgenden Fähigkeiten einschließend:
(a) Beschleunigen der Drehung des Rotors (610), um elektrische Energie in kinetische Energie umzuwandeln, die in den ein oder mehreren kinetischen Generatoren (110, 600) gespeichert ist, und
(b) Verlangsamen der Drehung des Rotors (610), um elektrische Energie aus gespeicherter kinetischer Energie zu erzeugen;
**dadurch gekennzeichnet, dass** es Folgendes umfasst:
- mindestens einen Sensor (720) zum Erzeugen eines oder mehrerer Sensorsignale, die mindestens eine Bewegungscharakteristik des Seeschiffs oder der Seeplattform (102) angeben; und
- ein Steuermodul (900) zum:
(a) Bestimmen, auf der Basis der ein oder mehreren Sensorsignale, eines Bewegungszustands des Seeschiffs oder der Seeplattform (102), und
(b) Auferlegen, auf der Basis des Bewegungszustands, eines Limits für mindestens eines von der Beschleunigungsrate und der Verlangsamungsrate, um die ein oder mehreren kinetischen Generatoren (110, 600) innerhalb eines sicheren Betriebsbereichs zu halten,
wobei das Steuermodul (900) Folgendes umfasst:
einen Prozessor (910), der zum kommunikativen Koppeln mit dem kinetischen Generator (110; 600) konfiguriert ist;
eine Schnittstelle (990), die kommunikativ mit dem Prozessor (910) gekoppelt ist; und
einen nichtflüchtigen Speicher (920), der maschinenlesbare Befehle einschließt.

6. Kinetisches Generatorsystem nach Anspruch 5, **dadurch gekennzeichnet, dass** der mindestens eine Sensor (720) einen Neigungssensor einschließt, der mit einem Nicht-Rotor-Teil der ein oder mehreren kinetischen Generatoren (110, 600) gekoppelt oder in der lokalen Umgebung der kinetischen Generatoren (110, 600) positioniert ist.

7. Inselnetz-Stromerzeugungssystem, das Folgendes umfasst:
- einen Strombus;
- einen oder mehrere Verbrennungsgeneratoren (120), die elektrisch mit dem Strombus gekoppelt sind; und ein oder mehrere kinetische Generatorsysteme (700) nach Anspruch 5 oder Anspruch 6, die jeweils einen oder mehrere kinetische Generatoren (110, 600) mit den folgenden Fähigkeiten umfassen:
(a) Liefern von darin gespeicherter Energie zu dem Strombus, und
(b) Speichern von Energie von dem Strombus in kinetischer Form.

8. Bewegungszustandsabhängiges Verfahren (800) zum Betreiben eines kinetischen Generators auf einem Seeschiff oder einer Seeplattform, wobei der kinetische Generator konfiguriert ist zum:
(a) Umwandeln von ihm zugeführter elektrischer Energie in kinetische Energie eines Rotors des kinetischen Generators und
(b) Umwandeln von gespeicherter kinetischer Energie des Rotors in elektrische Energie, wenn eine elektrische Energieausgabe von dem kinetischen Generator erforderlich ist,
**dadurch gekennzeichnet, dass** es Folgendes umfasst:
- Bestimmen (820) eines Bewegungszustands des Seeschiffs oder der Seeplattform; und
- Auferlegen (830) eines Limits für mindestens eines von dem Laden und dem Entladen des kinetischen Generators auf der Basis des Bewegungszustands, um den kinetischen Generator innerhalb eines sicheren Betriebsbereichs zu halten, unter Verwendung des Steuersystems nach Anspruch 1.

9. Verfahren nach Anspruch 8, **dadurch gekennzeichnet, dass** der Auferlegungsschritt das Begrenzen (832), auf der Basis des Bewegungszustands, von mindestens einem von der Beschleunigung und der Verlangsamung eines Rotors des kinetischen Generators umfasst.

10. Verfahren nach Anspruch 8 oder Anspruch 9, **dadurch gekennzeichnet, dass** der Auferlegungsschritt für jedes von dem mindestens einen von Laden und Entladen des kinetischen Generators jeweils das Auferlegen eines Limits (834) ausgewählt aus einer entsprechenden diskreten Vielzahl von Raten umfasst.

11. Verfahren nach Anspruch 1, **dadurch gekennzeichnet, dass** es Folgendes umfasst:
- in dem Bestimmungsschritt, Bestimmen des Wertes einer Bewegungscharakteristik des Seeschiffs oder der Seeplattform (822); und
- in dem Auferlegungsschritt, Begrenzen der Rate von mindestens einem von dem Laden und dem Entladen des kinetischen Generators auf eine Rate, die eine graduelle Funktion des Wertes der Bewegungscharakteristik (836) ist.

12. Verfahren nach den Ansprüchen 8-11, **dadurch gekennzeichnet, dass** der Auferlegungsschritt das Zulassen, wenn das Seeschiff oder die Seeplattform in einem Zustand hoher Bewegung ist, der Ladeunterstützung durch den kinetischen Generator mit einer Verlangsamungsrate des Rotors umfasst, die auf weniger als eine entsprechende Verlangsamungsrate begrenzt ist, die zugelassen wird, wenn das Seeschiff oder die Seeplattform in einem Zustand geringerer Bewegung ist (846).

13. Verfahren nach den Ansprüchen 8-12 und ferner das Überwachen mindestens einer Bewegungscharakteristik des Seeschiffs oder der Seeplattform umfassend, **dadurch gekennzeichnet, dass** der Auferlegungsschritt das automatische Wechseln des Betriebsmodus des kinetischen Generators auf der Basis der Überwachung umfasst und dass der Schritt des automatischen Wechselns das Wechseln von einem gegenwärtigen Betriebsmodus des kinetischen Generators umfasst, wenn über eine vordefinierte Dauer des Überwachungsschritts konstant erfasst wird, dass die mindestens eine Bewegungscharakteristik mit einem anderen Betriebsmodus des kinetischen Generators assoziiert ist.

14. Verfahren nach Anspruch 13, **dadurch gekennzeichnet, dass** der Überwachungsschritt das Erfassen der Bewegung (814) oder des Neigungswinkels (812) von mindestens einem von einem Nicht-Rotor-Teil des kinetischen Generators und einer lokalen Umgebung des kinetischen Generators umfasst, und dass der Überwachungsschritt das Messen eines Stroms eines aktiven Magnetlagers (816) umfasst.

15. Verfahren nach den Ansprüchen 8-14, **dadurch gekennzeichnet, dass** es Folgendes umfasst:
- in dem Bestimmungsschritt, Vergleichen der statischen Neigung und der dynamischen Neigung des Seeschiffs oder der Seeplattform mit jeweiligen Schwellenwerten; und
- in dem Auferlegungsschritt, wenn mindestens eines von der statischen Neigung und der dynamischen Neigung ihren Schwellenwert übersteigt, Begrenzen von mindestens einem von dem Laden und dem Entladen des kinetischen Generators auf eine Rate, die geringer ist als eine entsprechende Rate, die mit der statischen Neigung und der dynamischen Neigung assoziiert ist, die beide unter ihrem jeweiligen Schwellenwert liegen.

## Revendications

1. Système de commande pour un fonctionnement dépendant de l'état de mouvement d'un générateur cinétique (110 ; 600) sur un navire ou une plateforme marine (102), comprenant :
- un processeur (910) configuré pour être couplé de manière communicative au générateur cinétique (110 ; 600) ;
- une interface (990) couplée de manière communicative avec le processeur (910) ; et
- une mémoire non transitoire (920) incluant des instructions lisibles par machine ;
**caractérisé en**
- **ce que** l'interface (990) est adaptée pour recevoir un signal de capteur indicatif d'une caractéristique de mouvement du navire ou de la plateforme marine (102) ; et
- ce que le processeur (910), lors de l'exécution des instructions lisibles par machine, est adapté pour exécuter les étapes :
∘ de traitement du signal du capteur pour déterminer un état de mouvement du navire ou de la plateforme marine (102), et
∘ d'imposition d'une limite à au moins l'une de la charge et de la décharge du générateur cinétique (110 ; 600) sur la base de l'état de mouvement pour maintenir le générateur cinétique (110 ; 600) dans une plage de fonctionnement sûre.

2. Système de commande selon la revendication 1, **caractérisé en ce que** les instructions lisibles par machine sont configurées pour, lors de l'exécution par le processeur (910) et lorsque ledit traitement détermine que le navire ou la plateforme marine (102) est dans un état de mouvement élevé, désactiver la charge du générateur cinétique (110 ; 600).

3. Système de commande selon les revendications 1 à 2, **caractérisé en ce que** la mémoire non transitoire (920) inclut en outre au moins l'un parmi :
(i) une fonction de décharge (944) définissant une limite de taux de décharge en fonction d'une valeur d'une caractéristique de mouvement du navire ou de la plateforme marine (102) et
(ii) une fonction de charge (946) définissant une limite de taux de charge en fonction d'une valeur d'une caractéristique de mouvement du navire ou de la plateforme marine (102),
- les instructions lisibles par machine étant configurées pour, lors de l'exécution par le processeur (910), traiter le signal de capteur pour déterminer la valeur de la caractéristique de mouvement et appliquer au moins l'une de la fonction de décharge (944) et de la fonction de charge (946) pour imposer au moins une de la limite de taux de décharge et de la limite de taux de charge.

4. Système de commande selon les revendications 1 à 2, **caractérisé en**
- **ce que** la mémoire non transitoire inclut en outre au moins une limite d'inclinaison,
- ce que les instructions lisibles par machine sont configurées pour, lors de l'exécution par le processeur, traiter le signal du capteur pour déterminer une inclinaison du générateur cinétique, et sur la base de la comparaison de l'inclinaison avec l'au moins une limite d'inclinaison au moins l'une de la charge et de la décharge du générateur cinétique, et
- ce que l'au moins une limite d'inclinaison inclut une limite d'inclinaison statique et une limite d'inclinaison dynamique,
- dans lequel les instructions lisibles par machine sont configurées pour, lors de l'exécution par le processeur,
(i) traiter le signal du capteur pour déterminer l'inclinaison statique et dynamique du générateur cinétique, et
(ii) lorsqu'au moins l'une de l'inclinaison statique et de l'inclinaison dynamique dépasse la limite d'inclinaison statique et une limite d'inclinaison dynamique, respectivement, limiter au moins l'une de la charge et de la décharge du générateur cinétique à un taux qui est inférieur à un taux correspondant associé à l'inclinaison statique et à l'inclinaison dynamique qui sont toutes deux inférieures à leurs seuils respectifs.

5. Système de générateur cinétique pour un fonctionnement dépendant de l'état de mouvement d'un générateur cinétique (110, 600) sur un navire ou une plateforme marine (102), comprenant :
- un ou plusieurs générateurs cinétiques (110, 600) incluant un rotor (610) et un couplage par induction magnétique capable :
(a) d'accélérer la rotation du rotor (610) pour convertir l'énergie électrique en énergie cinétique stockée dans les un ou plusieurs générateurs cinétiques (110, 600) et
(b) décélérer la rotation du rotor (610) pour générer de l'énergie électrique à partir de l'énergie cinétique stockée ;
**caractérisé en ce qu'**il comprend :
- au moins un capteur (720) pour générer un ou plusieurs signaux de capteur indiquant au moins une caractéristique de mouvement du navire ou de la plateforme marine (102) ; et
- un module de commande (900), pour :
(a) déterminer, sur la base des un ou plusieurs signaux de capteur, un état de mouvement du navire ou de la plateforme marine (102), et
(b) imposer une limite à au moins l'un du taux de ladite accélération et du taux de ladite décélération sur la base de l'état de mouvement, pour maintenir les un ou plusieurs générateurs cinétiques (110, 600) dans une plage de fonctionnement sûre,
dans lequel le module de commande (900) comprend :
un processeur (910) configuré pour être couplé de manière communicative au générateur cinétique (110 ; 600) ;
une interface (990) couplée de manière communicative avec le processeur (910) ; et
une mémoire non transitoire (920) incluant des instructions lisibles par machine.

6. Système de générateur cinétique selon la revendication 5, **caractérisé en ce que** l'au moins un capteur (720) inclut un capteur d'inclinaison couplé à une partie non-rotor des un ou plusieurs générateurs cinétiques (110, 600) ou positionné dans l'environnement local des générateurs cinétiques (110, 600).

7. Système de production d'énergie électrique en micro-réseau, comprenant :
- un bus d'alimentation électrique ;
- un ou plusieurs générateurs à combustion (120) couplés électriquement au bus d'alimentation électrique ; et un ou plusieurs systèmes de générateurs cinétiques (700) selon la revendication 5 ou la revendication 6 comprenant chacun un ou plusieurs générateurs cinétiques (110, 600) capables de :
(a) fournir l'énergie qui y est stockée au bus d'alimentation électrique, et
(b) stocker l'énergie du bus d'alimentation électrique sous forme cinétique.

8. Procédé dépendant de l'état de mouvement (800) pour faire fonctionner un générateur cinétique sur un navire ou une plateforme marine, ledit générateur cinétique étant configuré pour
(a) convertir l'énergie électrique, qui lui est fournie, en énergie cinétique d'un rotor du générateur cinétique et
(b) convertir l'énergie cinétique stockée dudit rotor en énergie électrique lorsqu'une sortie d'énergie électrique du générateur cinétique est requise,
**caractérisé en ce qu'**il comprend :
- la détermination (820) d'un état de mouvement du navire ou de la plateforme marine ; et
- l'imposition (830) d'une limite sur au moins l'une de la charge et de la décharge du générateur cinétique sur la base de l'état de mouvement pour maintenir le générateur cinétique dans une plage de fonctionnement sûre, en utilisant le système de commande selon la revendication 1.

9. Procédé selon la revendication 8, **caractérisé en ce que** l'étape d'imposition comprend, sur la base de l'état de mouvement, la limitation (832) d'au moins l'une de l'accélération et de la décélération d'un rotor du générateur cinétique.

10. Procédé selon la revendication 8 ou la revendication 9, **caractérisé en ce que** l'étape d'imposition comprend, pour chacune des au moins une charge et une décharge du générateur cinétique, l'imposition d'une limite (834) sélectionnée parmi une pluralité discrète correspondante de taux.

11. Procédé selon la revendication 1, **caractérisé en ce qu'**il comprend :
- dans l'étape de détermination, la détermination d'une valeur d'une caractéristique de mouvement du navire ou de la plateforme marine (822) ; et
- dans l'étape d'imposition, la limitation du taux d'au moins une des charge et décharge du générateur cinétique à un taux qui est une fonction graduelle de la valeur de la caractéristique de mouvement (836).

12. Procédé selon les revendications 8 à 11, **caractérisé en ce que** l'étape d'imposition comprend, lorsque le navire ou la plateforme marine est dans un état de mouvement élevé, l'autorisation du support de charge par le générateur cinétique avec un taux de décélération du rotor limité à moins d'un taux de décélération correspondant autorisé lorsque le navire ou la plateforme marine est dans un état de mouvement moindre (846).

13. Procédé selon les revendications 8 à 12 et comprenant en outre la surveillance d'au moins une caractéristique de mouvement du navire ou de la plateforme marine, **caractérisé en ce que** l'étape d'imposition comprend le changement automatique du mode de fonctionnement du générateur cinétique sur la base de ladite surveillance, et **en ce que** l'étape de changement automatique comprend le changement d'un mode de fonctionnement actuel du générateur cinétique lors de la détection constante, sur une durée prédéfinie de l'étape de surveillance, que l'au moins une caractéristique de mouvement est associée à un autre mode de fonctionnement du générateur cinétique.

14. Procédé selon la revendication 13, **caractérisé en ce que** l'étape de surveillance comprend la détection du mouvement (814) ou de l'angle d'inclinaison (812) d'au moins l'une d'une partie non-rotor du générateur cinétique et d'un environnement local du générateur cinétique, et **en ce que** l'étape de surveillance comprend la mesure d'un courant d'un palier magnétique actif (816).

15. Procédé selon les revendications 8 à 14, **caractérisé en ce qu'**il comprend :
- dans l'étape de détermination, la comparaison de l'inclinaison statique et l'inclinaison dynamique du navire ou de la plateforme marine à des seuils respectifs ; et
- dans l'étape d'imposition, lorsqu'au moins l'une de l'inclinaison statique et de l'inclinaison dynamique dépasse son seuil, la limitation d'au moins l'une de la charge et de la décharge du générateur cinétique à un taux qui est inférieur à un taux correspondant associé à l'inclinaison statique et à l'inclinaison dynamique qui sont toutes deux inférieures à leurs seuils respectifs.
